# FASCICULE DE BREVET EUROPEEN

(11) **EP 2 072 995 B1**
(45) Date de publication et mention de la délivrance du brevet: **16.06.2010**
(21) Numéro de dépôt: 08354094.8
(22) Date de dépôt: 18.12.2008
(51) Int. Cl.: G01N 3/20

(54) **Procédé de mesure du fluage d'un film mince, intercalé entre deux substrats rigides, avec une extrémité encastrée**
Messverfahren des Kriechens einer Dünnschicht, die zwischen zwei starre Substrate eingeschoben ist und deren eines Ende eingeklemmt wird
Method of measuring the creep of a thin film, placed between two rigid substrates, with one end recessed

(30) Priorité: 20.12.2007 FR 0708955
(43) Date de publication de la demande: 24.06.2009
(73) Titulaire: Commissariat à l'Energie Atomique, 75015 Paris (FR)
(72) Inventeur: Petitdidier, Cécile, 38610 Gières (FR); Tiron, Raluca, 38950 Saint-Martin-Le-Vinoux (FR); Mortini, Bénédicte, 38240 Meylan (FR)
(74) Mandataire: Hecké, Gérard

(56) Documents cités:
- EP-B- 0 793 088
- US-A- 5 154 085
- US-B1- 6 386 045
- CARLIER V ET AL: "Supported dynamic mechanical thermal analysis: an easy, powerful and very sensitive technique to assess thermal properties of polymer, coating and even nanocoating" POLYMER, ELSEVIER SCIENCE PUBLISHERS B.V, GB, vol. 42, no. 12, 1 juin 2001 (2001-06-01), pages 5327-5335, XP004230998 ISSN: 0032-3861
- HAQUE M A ET AL: "Application of MEMS force sensors for in situ mechanical characterization of nano-scale thin films in SEM and TEM" SENSORS AND ACTUATORS A, ELSEVIER SEQUOIA S.A., LAUSANNE, CH, vol. 97-98, 1 avril 2002 (2002-04-01), pages 239-245, XP004361608 ISSN: 0924-4247

## Description

### Domaine technique de l'invention

L'invention est relative à un procédé de mesure des propriétés viscoélastiques d'un film intercalé entre deux substrats rigides formant un échantillon comportant une première extrémité fixée dans un dispositif de mesure, le procédé comportant l'application d'une force sur une zone prédéterminée de l'échantillon.

### État de la technique

L'étude des propriétés viscoélastiques des matériaux et notamment du fluage est couramment réalisée au moyen d'appareils d'analyse mécanique dynamique. Le document EP-B-0793088 décrit un appareil d'analyse mécanique dynamique qui peut être utilisé pour caractériser les propriétés viscoélastiques d'un grand nombre de matériaux.

Au moyen de ce type de dispositif, il est possible de réaliser sur différents échantillons, de multiples sollicitations, par exemple, des essais de flexion 3 points ou des études de flexion simple/double cantilever. L'échantillon est alors structuré afin de former une éprouvette aux dimensions compatibles avec l'objet de l'étude. L'éprouvette est alors sollicitée et les mesures de contraintes et des déformations qui en résultent permettent sa caractérisation viscoélastique et notamment la détermination de son fluage.

Les documents US-5154085 et US-6386045 décrivent des mesures de viscoélasticité respectivement par traction et par flexion ou cisaillement avec application d'une force sur une extrémité libre de l'échantillon

Cependant, ces méthodes sont adaptées à des échantillons assez épais, typiquement de quelques microns à quelques millimètres d'épaisseur, et qui sont solides à température ambiante et non cassants.

Ainsi, à température ambiante, les matériaux vitreux dont la tenue mécanique est faible, les matériaux qui possèdent une température de transition vitreuse inférieure à la température ambiante et les matériaux à l'état liquide ne sont pas analysables.

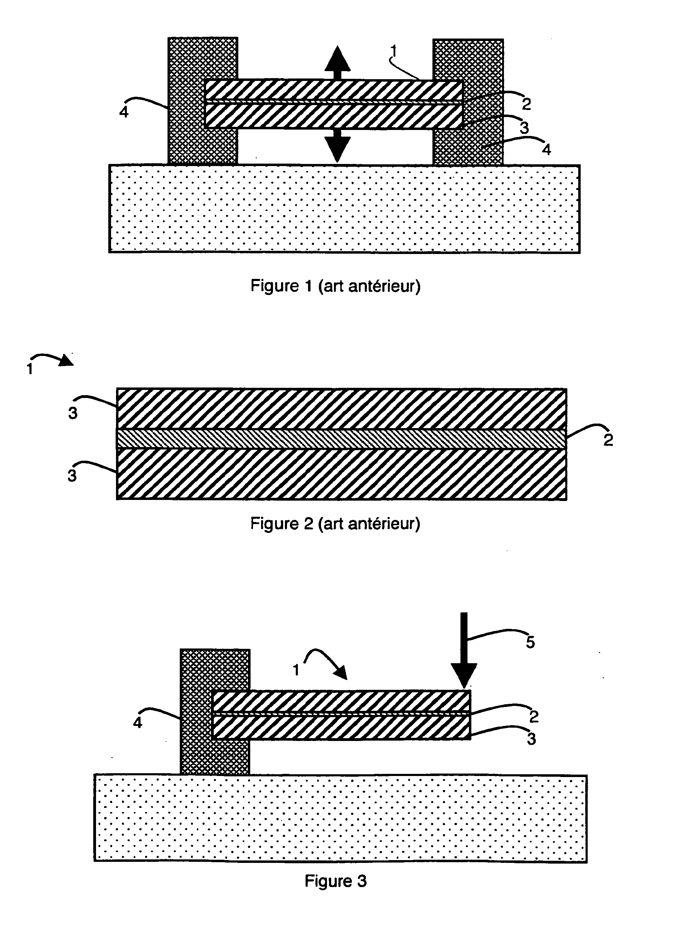

L'article de Carlier et al. « Supported dynamic mechanical analysis : an easy, powerful and very sensitive technique to assess thermal properties of polymer, coating and even nanocoating », Polymer (42), pp5327-5335, 2001, décrit (figure 1) l'utilisation d'un dispositif de mesure des propriété viscoélastique d'un ensemble de films 2 en résine polymère, qui est inséré entre deux plaques rigides 3 (figure 2) pour former un échantillon 1. L'échantillon 1 est encastré, par des mors 4, à chacune de ses extrémités, constituant ainsi un montage en flexion double cantilever. Il est sollicité, au moyen d'une force périodique appliquée entre les deux mors et illustré par des flèches sur la figure 1. Avec ce montage, la majeure partie des propriétés viscoélastiques du film 2 est accessible à la mesure. Cependant, bien que le film 2 soit cisaillé, il est impossible de mesurer, de manière correcte, le fluage du film de résine. En effet dans le signal mesuré, les plaques rigides ont un effet majoritaire comparé à la résine, ce qui rend la mesure impossible ou fausse. De plus, l'empilement comporte un très grand nombre de substrats afin d'augmenter la quantité de matière et ainsi obtenir un signal mesurable.

L'article de Haque et al. « Application of MEMS force sensors for in situ mechanical characterization of nano-scale thin films in SEM and TEM », Sensors and Actuators A 97-97 (2002) 239-245) décrit l'utilisation d'un système électro-mécanique micrométrique pour étudier des couches minces.

### Objet de l'invention

L'objet de l'invention consiste à réaliser un procédé de mesure du fluage permettant de mesurer les caractéristiques de fluage d'un film mince, la mesure étant rapide et facile à mettre en oeuvre.

Le procédé selon l'invention est caractérisé par les revendications annexées et plus particulièrement par le fait que ladite force est appliquée sur une extrémité libre de l'échantillon et en ce que le procédé comporte la mesure du fluage du film et la détermination d'une température caractéristique.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente une vue schématique, en coupe, d'un dispositif selon l'art antérieur.
La figure 2 représente une vue schématique, en coupe d'un échantillon selon l'art antérieur.
La figure 3 représente une vue schématique, en coupe, d'un dispositif selon l'invention.

### Description d'un mode de réalisation préférentiel de l'invention

Comme illustré à la figure 3, l'échantillon 1 à analyser est constitué d'un film 2 mince, à caractériser, intercalé entre deux substrats rigides 3. Les substrats rigides inférieur et supérieur 3, sensiblement parallèles, sont choisis, avantageusement, dans le même matériau afin de faciliter l'analyse des propriétés viscoélastiques du film 2 mince. Le film 2 mince a, de préférence une épaisseur inférieure à 1µm ce qui l'empêche d'être tenu à ses extrémités sans se déformer. Les substrats 3 rigides sont choisis inertes dans la gamme de température dans laquelle l'échantillon 1 est sollicité. Par ailleurs, les substrats 3 sont également suffisamment élastiques pour supporter la déformation du film 2 mince. L'échantillon 1 a avantageusement la forme d'un parallélépipède rectangle dont la longueur est nettement supérieure à la largeur et à la hauteur. A titre d'exemple, l'échantillon 1 a une longueur de 3,5cm avec une largeur de 1,5cm, l'épaisseur étant de préférence entre 0,1 et 1 mm avec des substrats de 750µm d'épaisseur.

Le film 2 est par exemple une résine lithographique dont l'épaisseur est comprise entre quelques dixièmes de nanomètres et un millimètre, typiquement entre 1 mm et 0,1nm. Les substrats rigides 3 sont avantageusement en silicium, par exemple des substrats massifs en silicium.

Le film 2 est déposé sur l'un des substrats rigides 3 par toute technique adaptée, par exemple par dépôt à la tournette (« spin coating » en anglais), puis le deuxième substrat rigide 3 est déposé sur le film 2.

L'échantillon 1 est fixé à une seule extrémité, par tout moyen de fixation adapté et présente ainsi une extrémité fixe et une extrémité libre. L'échantillon est alors sensiblement horizontal, hors sollicitation, c'est-à-dire que, dans l'échantillon, l'empilement des substrats rigides 3 et du film d'étude 2 est vertical.

L'échantillon 1 est avantageusement maintenu à son extrémité fixe par un mors rigide 4 qui assure l'encastrement. L'autre extrémité, qui est libre, est ensuite soumise à des moyens d'application d'une force qui se traduisent par l'application d'une force verticale schématisée par la flèche 5 sur la figure 3.

Par ailleurs, la force à appliquer dépend du substrat et non du film 2. Ce cas de figure est alors analogue à celui d'une poutre homogène encastrée à une extrémité et étudiée en flexion. Quand la couche de polymère atteint sa température de transition vitreuse, ses propriétés élastiques changent et elle se cisaille, ce qui lui permet de suivre la déformation du substrat.

Le cisaillement du film 2 induit le déplacement vertical de l'extrémité libre du substrat 3 et la variation de ce déplacement avec la température de l'échantillon permet de déterminer les différents événements thermiques (transition vitreuse, décomposition, réticulation, polymérisation...) du film 2 mince.

Une étude à température constante permet avec l'étude de la variation du déplacement des substrats dans le temps de mesurer les propriétés de fluage du film mince. De cette manière, des temps caractéristiques de fluages et des amplitudes de fluages sont déterminés.

Dans le cas où le film et une résine photosensible, il est également possible d'étudier les réactions chimiques qui sont classiquement utilisées durant sont cycle de vie (réticulation, dégradation, polymérisation...)

Le mors rigide 4 est typiquement un mors utilisé lors d'un essai de flexion à simple ou double encastrement et l'application de la sollicitation peut être réalisée, par exemple, par le même type de dispositif que dans le cas d'une sollicitation en flexion 3 points.

Le dispositif décrit ci-dessus est plus particulièrement adapté à l'étude du fluage d'un film 2 constitué par une résine lithographique mais le dispositif est, de manière plus générale, adapté à l'étude du fluage des matériaux vitreux dont la tenue mécanique est faible à la température de sollicitation. Le film 2 peut, par exemple, être réalisé dans un matériau dont la température de transition vitreuse est inférieure à la température de sollicitation.

Le dispositif 2 peut être utilisé, par exemple, pour étudier l'évolution d'une température caractéristique, par exemple la température de transition vitreuse, en fonction de l'épaisseur de la couche (2) mince. L'étude de l'évolution de la température de transition vitreuse peut être réalisée de la manière suivante :
- l'application d'une force prédéterminée à une extrémité libre de l'échantillon 1,
- la mesure du film 2,
- la détermination, à partir de la mesure du cisaillement, du fluage du film 2.
   Le substrat étant en flexion, la mesure du déplacement de l'extrémité des substrats est réalisée en fonction de l'évolution de la température. Il est également possible d'appliquer une déformation et de mesurer la force nécessaire pour maintenir cette déformation. Les forces mises en jeu sont typiquement de l'ordre de quelques Newtons. L'évolution de la température peut être effectuée simplement en appliquant en rampe en température.

## Revendications

1. Procédé de mesure des propriétés viscoélastiques d'un film (2) intercalé entre deux substrats rigides (3) formant un échantillon (1) comportant une première extrémité fixée dans un dispositif de mesure, le procédé comportant l'application d'une force sur une zone prédéterminée de l'échantillon (1), procédé **caractérisé en ce que** ladite force est appliquée sur une extrémité libre de l'échantillon (1) et **en ce que** le procédé comporte la mesure du fluage du film (2) et la détermination d'une température caractéristique choisie parmi les température de transition vitreuse, de décomposition, de réticulation et de polymérisation.

2. Procédé selon la revendication 1, **caractérisé en ce qu'**il comporte l'encastrement de l'extrémité fixe de l'échantillon (1) au moyen d'un mors.

3. Procédé selon l'une des revendications 1 et 2 pour étudier l'évolution de la température de transition vitreuse en fonction de l'épaisseur du film (2) mince, **caractérisé en ce qu'**il comporte :
- l'application d'une force prédéterminée à l'extrémité libre de l'échantillon (1),
- la mesure de cisaillement du film (2),
- la détermination, à partir de la mesure de cisaillement, du fluage du film (2)
- et la détermination de la température de transition vitreuse.

4. Procédé selon l'une quelconque des revendications 1 à 3, **caractérisé en ce que** le film (2) a une épaisseur comprise entre 1 mm et 0,1nm.

5. Procédé selon l'une quelconque des revendications 1 à 4, **caractérisé en ce que** les substrats rigides (3) sont en silicium.

6. Procédé selon l'une quelconque des revendications 1 à 5, **caractérisé en ce que** le film (2) est une résine lithographique.

## Claims

1. A method for measuring the viscoelastic properties of a film (2) Inserted between two rigid substrates (3) forming a sample (1) comprising a first end fixed In a measuring device, the method comprising application of a force on a predetermined area of the sample (1), a method **characterized in that** said force Is applied on a free end of the sample (1) and **in that** the method comprises measurement of the creep of the film (2) and determination of a characteristic temperature chosen among glass transition temperature, decomposition temperature, cross-linking temperature, polymerization temperature.

2. The method according to claim 1, **characterized in that** it comprises cantilevering of the fixed end of the sample (1) by means of a clamp.

3. The method according to one of claims 1 and 2 for studying the variations of the glass transition temperature versus the thickness of the thin film (2), comprising:
- application of a predetermined force on the free end of the sample (1),
- measuring the shear of the film (2),
- determining the creep of the film from the shear measurement (2),
- and determining the glass transition temperature.

4. The method according to any one of the claim 1 to 3, wherein the film (2) has a thickness comprised between 1 mm and 0.1nm.

5. The method according to any one of the claim 1 to 4, wherein the rigid substrates (3) are made from silicon.

6. The method according to any one of the claim 1 to 5, wherein the film (2) is a lithographic resin.

## Patentansprüche

1. Verfahren zum Messen der viskoelastischen Eigenschaften einer Dünnschicht (2), die zwischen zwei starre Substrate (3) eingespannt ist, die eine Probe (1) bilden, die ein erstes Ende umfasst, das in eine Messvorrichtung eingespannt ist, wobei das Verfahren die Einwirkung einer Kraft auf einen vorbestimmten Bereich der Probe (1) umfasst, Verfahren, das **dadurch gekennzeichnet ist, dass** die genannte Kraft auf ein freies Ende der Probe (1) ausgeübt wird und dass das Verfahren das Messen des Kriechens der Dünnschicht (2) und die Bestimmung einer charakteristischen Temperatur umfasst, die aus der Glasübergangs-, Zersetzungs-, Vernetzungs- und Polymerisationstemperatur ausgewählt ist.

2. Verfahren nach Anspruch 1, **dadurch gekennzeichnet, dass** es das Einspannen des festen Endes der Probe (1) mittels einer Spannbacke umfasst.

3. Verfahren nach einem der Ansprüche 1 und 2 zur Untersuchung der Entwicklung der Glasübergangstemperatur in Abhängigkeit von der Dicke der Dünnschicht (2), **dadurch gekennzeichnet, dass** es umfasst:
- die Anwendung einer vorbestimmten Kraft auf das freie Ende der Probe (1),
- die Messung der Scherung der Dünnschicht (2),
- das Erfassen des Kriechens der Dünnschicht (2) auf der Grundlage der Schermessung,
- und die Bestimmung der Glasübergangstemperatur.

4. Verfahren nach einem der Ansprüche 1 bis 3, **dadurch gekennzeichnet, dass** die Dünnschicht (2) eine Dicke von 1 mm bis 0,1 nm hat.

5. Verfahren nach einem der Ansprüche 1 bis 4, **dadurch gekennzeichnet, dass** die starren Substrate (3) aus Silizium bestehen.

6. Verfahren nach einem der Ansprüche 1 bis 5, **dadurch gekennzeichnet, dass** die Dünnschicht (2) ein Fotoresist ist.
